# EUROPÄISCHE PATENTSCHRIFT

(11) **EP 2 230 077 B1**
(45) Veröffentlichungstag und Bekanntmachung des Hinweises auf die Patenterteilung: **06.01.2016**
(21) Anmeldenummer: 09155770.2
(22) Anmeldetag: 20.03.2009
(51) Int. Cl.: B41F 13/004, B41F 33/00, B41F 33/08

(54) **Verfahren zur Positionssynchronisierung eines aus mehreren Einzelantrieben bestehenden Antriebsverbunds**
Process for position-synchronization of a drive assembly consisting of a plurality of individual drives
Procédé pour la synchronisation de la position d'un ensemble d'entraînement composé d'une pluralité d'entraînements individuels

(43) Veröffentlichungstag der Anmeldung: 22.09.2010
(73) Patentinhaber: Baumüller Anlagen-Systemtechnik GmbH & Co. KG, 90482 Nürnberg (DE)
(72) Erfinder: Meis, Harold, Dipl.-Ing., 90559 Burgthann (DE); Monse, Mathias, Dipl.-Ing., 90480 Nürnberg (DE)
(74) Vertreter: Götz, Georg Alois

(56) Entgegenhaltungen:
- EP-A- 0 930 158
- EP-A- 1 719 618
- WO-A-2004/028805
- DE-A1- 10 123 881
- DE-A1- 19 651 427
- US-A- 4 527 788

## Beschreibung

Die Erfindung betrifft ein Verfahren zur Positionssynchronisierung eines aus mehreren Einzelantrieben bestehenden Antriebsverbunds, insbesondere eines Antriebsverbunds einer Druckmaschine, wobei für jeden Einzelantrieb als Nullreferenz für die Position ein eigener, insbesondere produktionsspezifischer, Referenzlagewert definiert wird, und in wenigstens einer Steuerungseinrichtung des Antriebsverbunds für wenigstens einen Einzelantrieb des Antriebsverbunds eine Funktion zur Einnahme des oder der jeweiligen Referenzlagewerte abgelegt wird.

Damit mittels einer Maschine, die einen Antriebsverbund aus Einzelantrieben aufweist, beispielsweise einer Druckmaschine allgemein oder einer Rotationsdruckmaschine, verwertbare Produkte bzw. Produkte, die die zu stellenden Qualitätsanforderungen erfüllen, hergestellt werden können, ist in aller Regel eine zuverlässige Synchronisierung der einzelnen Antriebe aufeinander erforderlich. Nur so kann die Produktion von Ausschussware bzw. Makulatur verhindert werden.

Die Synchronisation bzw. Herstellung eines derartigen positionssynchronen Antriebsverbunds erfolgt bisher in der Regel beim Anfahren des Antriebs- bzw. Produktionsverbands. Dabei ist das Vorgehen so, dass die Einzelantriebe ausgehend von ihrer eigenen Position einen Versatz zu einer Referenzposition für den Antriebs- oder Produktionsverbund einstellen. Gegebenenfalls erfolgt diese Einstellung eines Versatzes auch im Stillstand der Produktion. Beim Anfahren sind dann noch Korrekturen vorzunehmen.

Eine Positionskorrektur für die Einzelantriebe, die beim Anfahren des Produktionsverbunds durchgeführt werden muss, verbraucht jedoch Zeit und Ressourcen. Die Produkte, die während dieser Einstellzeit beim Anfahren des Produktionsverbunds erzeugt werden bzw. die Maschine verlassen, sind in aller Regel nicht verwertbar, sondern Ausschussware. Bei Druckmaschinen wird Makulatur produziert. Die beim Anfahren der Produktion bis zur Einnahme des Positionsgleichlaufs verstreichende Einstellzeit bedeutet in jedem Fall einen Zeitverlust. Dies wirkt sich negativ auf die Maschinenauslastung aus. Der Ressourcenverbrauch ist, insbesondere im Fall der Produktion von Ausschussware, nicht optimal.

US 4 527 788 betrifft eine Schlitzmaschine für eine Druckmaschine. Die Schlitzmaschine wie auch die Rotationseinrichtungen der Druckmaschine weisen einen Nullpunkt auf, der auf der jeweiligen Vorrichtung markiert ist. Die Markierungen können mittels eines Nullpunktsensors ausgelesen werden. Dabei werden die Informationen über die Lage des Nullpunktes zum Ausrichten der Vorrichtungen der Druckmaschine vor Druckbeginn verwendet.

WO 2004/02 88 05 A1 offenbart Antriebsvorrichtungen und Verfahren zum Antrieb einer Druckmaschine. Die einzelnen Antriebe weisen definierte Nullregistergrundstellungen als Referenzstellung auf. Diese sind vor der Erst-Inbetriebnahme zur Synchronisation der Einzelvorrichtungen der Druckmaschine anzufahren. Diese Referenzstellung wird als Null-Position gespeichert, wobei im Betrieb auf diese Null-Position ein Offset-Wert zur exakten Ausrichtung zu agieren ist.

Der Erfindung liegt damit die Aufgabe zugrunde, ein diesbezüglich verbessertes Verfahren zur Positionssynchronisierung eines aus mehreren Einzelantrieben bestehenden Antriebsverbunds, insbesondere eines Antriebsverbunds einer Druckmaschine, anzugeben.

Zur Lösung dieser Aufgabe ist bei einem Verfahren dieser Art erfindungsgemäß vorgesehen, dass in wenigstens einer Steuerungseinrichtung des Antriebsverbunds für wenigstens einen Einzelantrieb des Antriebsverbunds eine Funktion zum Stillsetzen und/oder schnellen Stillsetzen des Betriebs und/oder der Produktion mit Einnahme des oder der jeweiligen Referenzlagewerte im Stillstand, und/oder zur Einnahme des oder der jeweiligen Referenzlagewerte im Stillstand abgelegt wird, so dass der positionssynchrone Antriebsverbund bereits vor dessen Anfahren hergestellt ist.

Im Unterschied zu bisherigen Verfahren ist es damit erfindungsgemäß nicht so, dass nur eine einzige Referenzposition für den Produktionsverbund vorgegeben würde, auf die sich die einzelnen Antriebe bezögen bzw. zu der die einzelnen Antriebe einen Versatz einstellten, sondern es wird für jeden einzelnen Antrieb ein eigener Nullwert bzw. Lagewert PO definiert bzw. vorgegeben. Dieser Wert ist ein antriebsspezifischer Positionsnullwert, der beispielsweise durch eine Steuerung vorgegeben wird. Der Wert für diese antriebsspezifische Nullreferenz wird erfindungsgemäß vorzugsweise in Abhängigkeit von dem gewünschten Produktionsvorgang bzw. bestimmten Bedingungen, die spezifisch für die Produktion sind, gewählt. Dies bedeutet, dass der Lagewert PO davon abhängt, welches die jeweiligen Produktionsbedingungen sind bzw. welche Eigenschaften die zu produzierenden Produkte haben und/oder dergleichen.

Sollen mittels des Antriebs- und/oder Produktionsverbunds zu verschiedenen Zeiten unterschiedliche Produkte produziert werden, so können beispielsweise in einer (zentralen bzw. jeweils den Einzelantrieben oder einer bestimmten Zahl von Antrieben zugeordneten) Steuerungseinrichtung unterschiedliche Werte der Parameter PO für jeden einzelnen Antrieb und für jede der unterschiedlichen Produktionsvorgänge bzw. die variierenden Produktionsbedingungen abgelegt sein, die dann entsprechend an den Einzelantrieb weitergegeben werden bzw. gemäß denen die Ansteuerung der Einzelantriebe erfolgt. Der Begriff "Produktionsverbund", der im Folgenden oft statt oder ergänzend zu dem Begriff "Antriebsverbund" verwendet wird, bezeichnet dabei Antriebe, die im Rahmen eines bestimmten Produktionsvorgangs zusammenwirken.

Im Rahmen der Erfindung kann wie erwähnt eine hierarchisch aufgebaute Steuerung verwendet werden, beispielsweise mit einer zentralen Steuereinheit bzw. einem Leitwerk und mit weiteren Steuereinheiten, die den einzelnen Antrieben oder auch einer Unteranzahl von Antrieben zugeordnet sind, insbesondere Leistungsreglern bzw. achsspezifischen Modulen. An geeigneter Stelle in dieser Steuerung werden dann die jeweiligen Nullreferenzen beispielsweise in einer Datenbank(-tabelle) abgelegt, so dass der jeweilige Nullwert dem betreffenden Einzelantrieb übermittelt werden kann bzw. Steuerungseinrichtungen auf einer niedrigeren hierarchischen Ebene auf die für sie relevanten Nullwerte zugreifen können. Die Steuerung des Gesamtsystems kann somit mittels verschiedener Controllereinheiten, die hierarchisch angeordnet sind, erfolgen.

Ein wichtiger Vorteil des erfindungsgemäßen Verfahrens, bei dem für jeden Einzelantrieb eine Nullreferenz als Lagewert definiert wird, liegt darin, dass sich erfindungsgemäß ein Produktionsverbund beim Anfahren sofort (ohne Einstellzeit) in einer positionssynchronen Lage befindet und damit eine unmittelbare Produktionsbereitschaft gegeben ist. Die im Stand der Technik erforderliche Einstellzeit zur Einnahme des Positionsgleichlaufs bei Anfahren der Produktion entfällt. Dadurch können der Ressourcenverbrauch und die Maschinenauslastung verbessert werden. Die Einrichtzeiten verringern sich allgemein, wenn im Rahmen der Erfindung wie geschildert die Synchronisation der Antriebe bereits im Produktionsstillstand erfolgt.

Weiterhin kann erfindungsgemäß in wenigstens einer Steuerungseinrichtung des Antriebsverbunds für wenigstens einen Einzelantrieb des Antriebsverbunds, insbesondere für jeden Einzelantrieb, und/oder für den Antriebsverbund insgesamt und/oder für wenigstens einen aus mehreren Einzelantrieben bestehenden Produktionsverbund des Antriebsverbunds eine Funktion zur Einnahme des oder der jeweiligen Referenzlagewerte abgelegt werden.

Dies bedeutet, dass in einer zentralen Steuerungseinrichtung bzw. je nach Realisierung auch in dezentralen Steuerungseinrichtungen, die einem einzelnen Antrieb oder einer gewissen Unteranzahl von Antrieben zugeordnet sind, mittels einer Rechner- bzw. Prozessoreinrichtung eine Funktion implementiert wird, die dazu führt, dass jeder der einzelnen Antriebe den für ihn definierten bzw. vorgegebenen Referenzlagewert einnimmt. Diese Funktion kann beispielsweise als eine Funktion "MoveTo_P0()" für jeden Antrieb und den Produktionsverbund insgesamt realisiert werden.

Dies bietet den Vorteil, dass bei Eingabe des Befehls zur Ausführung dieser Funktion (an einem Eingabeterminal oder auch per Bedienknopf oder dergleichen) direkt die Einnahme der korrekten Lagewerte erfolgt bzw. veranlasst wird.

Dabei ist es von besonderem Vorteil, wenn die Funktion zur Einnahme des oder der jeweiligen Referenzlagewerte bei wenigstens einer, insbesondere bei jeder Zuordnung eines jeweiligen Einzelantriebs zu einem Produktionsverbund, insbesondere automatisch, ausgeführt wird.

Das bedeutet, dass vorzugsweise jedes Mal, wenn ein Einzelantrieb einem Produktionsverbund zur Produktion eines bestimmten Erzeugnisses, beispielsweise zum Drucken eines Druckerzeugnisses, zugeordnet wird bzw. ein Einzelantrieb an einen Produktionsverbund angekoppelt wird, diese Funktion angesteuert bzw. ausgelöst wird. Vorzugsweise erfolgt dies automatisch direkt bei Zuordnung des Antriebs zum Verbund bzw. Auswahl des gewünschten Produktionsvorgangs. Die Steuerungseinrichtung bzw. die mehreren Steuerungseinrichtungen bei einem hierarchischen, auf den einzelnen Antrieb oder Untersysteme von Antrieben ausgerichteten Aufbau, sind hierzu entsprechend ausgebildet, insbesondere mit geeigneten Programmmitteln versehen.

Wird jedes Mal schon im Produktionsstillstand automatisch ein Steuersignal ausgelöst, das die Einnahme der Nullposition bewirkt, so ist sichergestellt, dass beim Anfahren des Produktionsverbunds unmittelbar bzw. direkt die erforderliche Posltionssynchronislerung der Achsen bzw. Antriebe gegeben ist. Der positionssynchrone Antriebsverbund wird also bereits vor dem Anfahren der Produktion hergestellt, so dass sofort Produktionsbereitschaft besteht.

Des Weiteren kann erfindungsgemäß in wenigstens einer Steuerungseinrichtung des Antriebsverbunds für wenigstens einen Einzelantrieb des Antriebsverbunds, insbesondere für jeden Einzelantrieb, und/oder für den Antriebsverbund insgesamt und/oder für wenigstens einen aus mehreren Einzelantrieben bestehenden Produktionsverbund des Antriebsverbunds eine Funktion zum Stillsetzen und/oder schnellen Stillsetzen des Betriebs und/oder der Produktion und/oder zur Einnahme des oder der jeweiligen Referenzlagewerte im Stillstand abgelegt werden.

In der Steuerungseinrichtung bzw. den oder einigen Steuerungseinrichtungen für die Antriebe des Verbunds sind demgemäß weitere Funktionen implementiert, beispielsweise eine Funktion "StopTo_P0()" oder auch eine Funktion "FastStopTo_P0()" für jeden Einzelantrieb bzw. jede Achse, die bewirken, dass der Einzelantrieb innerhalb einer gewissen Zeit bzw. so schnell wie möglich stillgesetzt wird bzw., zum Beispiel bei einer außerplanmäßigen Störung, seinen Betrieb stoppt. Die Stillsetzungsfunktionen sind so gewählt, dass als Zielwert für die Lage der Einzelantriebe im Stillstand die Nullreferenz PO eingenommen wird. Damit wird ein geordnetes Stillsetzen einer Produktionsanlage ermöglicht, und zwar derart, dass der Betrieb jederzeit wieder mit den erfindungsgemäßen Vorteilen der unmittelbaren Positionssynchronisation bzw. Produktionsbereitschaft aufgenommen werden kann.

Darüber hinaus kann erfindungsgemäß der produktionsspezifische Referenzlagewert als Bestandteil einer Produktionskonfiguration definiert werden und/oder den Einzelantrieben bekannt gemacht werden, insbesondere seitens wenigstens einer Steuerungseinrichtung. Dies bedeutet, dass an einer geeigneten Stelle der Steuerungsebene für die mittels des Antriebsverbunds bzw. der zugehörigen Maschine herzustellenden Produkte Produktionskonfigurationen abgelegt und/oder gespeichert sind, als deren Bestandteil die Positionen PO als Nullreferenzen der Einzelantriebe vorgesehen sind. Wird nun zum Start einer bestimmten Produktion eine dieser zugeordnete Produktionskonfiguration ausgewählt, beispielsweise durch einen Bediener einer Steuerungseinrichtung, so werden die Positionen PO an die Einzelantriebe übertragen bzw. diesen jeweils bekannt gemacht. Dies kann von einer zentralen Steuerungseinrichtung aus erfolgen oder auch dezentral, zum Beispiel in Abhängigkeit von dezentral erhaltenen Signalen, die der Identifizierung der ausgewählten Produktionskonfiguration dienen.

Grundsätzlich ist es im Rahmen der Erfindung auch denkbar, für einen bzw. eine bestimmte Anzahl von Antrieben eine produktionsunabhängige Wahl eines Nullwerts vorzunehmen. Diese konstante Nullreferenz ermöglicht bei ausgezeichneten oder besonders kritischen Antrieben einen Wechsel der Produktion ohne eine Verstellung dieses jeweiligen Antriebs.

Darüber hinaus kann mittels der Definition eines eigenen Referenzlagewerts für jeden Einzelantrieb ein Ausschalten und/oder Verdrehen und/oder Verstellen von Einzelantrieben beim Anfahren und/oder erneuten Anfahren der Produktion unterstützt werden.

Es ist somit erfindungsgemäß nicht mehr nötig, dass die einzelnen Antriebe ausgehend von der eigenen Position einen Versatz zu einer Referenzposition einstellen, dass also die Positionskorrektur für die Einzelantriebe erst beim Anfahren des Produktionsverbunds erfolgt, was zum einen zeitaufwendig ist, zum anderen einen erhöhten Ressourcenverbrauch mit sich bringt, sondern durch die Vorgabe der jeweils eigenen Lagewerte PO kann jederzeit ein einzelner Antrieb verstellt bzw. ausgeschaltet werden, ohne dass eine zentrale Referenz bekannt sein oder berücksichtigt werden müsste. Dies vereinfacht den Produktionsablauf erheblich. Die Produktion kann deutlich flexibler erfolgen und geändert werden.

Weiterhin offenbart wird ein Antriebsverbund, insbesondere eine Druckmaschine, aus mehreren Einzelantrieben mit wenigstens einer Steuerungseinrichtung, der mit Mitteln zur Positionssynchronisierung gemäß einem Verfahren wie vorstehend geschildert ausgebildet ist. Der Antriebsverbund zeichnet sich dadurch aus, dass seitens der Mittel für jeden Einzelantrieb als Nullreferenz für die Position ein eigener, insbesondere produktionsspezifischer, Referenzlagewert definierbar ist. Die einzelnen Antriebe des Antriebsverbunds bzw. die Einzelantriebe eines Produktionsverbunds innerhalb des Antriebsverbunds erhalten somit ihre eigene Nullreferenz, einen Lagewert P0, der in aller Regel produktionsspezifisch (unterschiedlich bzw. angepasst) ist. wobei es wie bereits erwähnt selbstverständlich möglich ist, dass ausgezeichnete Antriebe definiert werden, die einen konstanten, produktionsunabhängigen Nullreferenzwert erhalten.

Des weiteren ist es zweckmäßig, wenn auf einer oder mehreren Ebenen der Steuerungsmittel des Antriebsverbunds geeignete Funktionen definiert bzw. implementiert werden, die bewirken, dass die einzelnen Antriebe ihre Referenzwerte einnehmen bzw. dass ein Produktionsverbund des Antriebsverbunds die Nullreferenzwerte einnimmt. Insbesondere ist das Auslösen einer solchen Funktion sinnvoll, wenn ein Zuordnen eines einzelnen Antriebs zu einem Produktionsverbund erfolgt. Darüber hinaus werden im Rahmen des Antriebsverbunds mittels der Steuerungseinrichtungen zweckmäßiger Weise Funktionen implementiert, die ein geordnetes Stillsetzen der Produktion und eine Einnahme des produktionsspezifischen Nullreferenzwerts beim Stillsetzen ermöglichen. Dadurch wird eine Synchronisation der Antriebe bereits im Produktionsstillstand erreicht. Der produktionssynchrone Antriebsverbund wird also bereits vor dem Anfahren der Produktion erzeugt, um so Zeit und Ressourcen einzusparen.

Des Weiteren betrifft die Erfindung eine Druckmaschine, ausgebildet mit einem Antriebsverbund mit mehreren Einzelantrieben, insbesondere wie vorstehend geschildert, und/oder ausgebildet mit einem Antriebsverbund aus mehreren Einzelantrieben und wenigstens einer Steuerungseinrichtung, wobei die Druckmaschine mit Mitteln zur Positionssynchronisierung des Antriebsverbunds gemäß einem Verfahren wie vorstehend geschildert ausgebildet ist und wobei die Druckmaschine, beispielsweise eine Rotationsdruckmaschine, dadurch gekennzeichnet ist, dass seitens der Mittel für jeden Einzelantrieb als Nullreferenz für die Position ein eigener, insbesondere produktionsspezifischer, Referenzlagewert definierbar ist. Die Nullwerte sind beispielsweise in Speichereinheiten in der Steuerung implementiert.

Die Steuerung der Druckmaschine bewirkt dann bei Aufnahme einer Produktion bereits im Stillstand der Anlage die Einnahme der Nulllagewerte PO der Einzelantriebe eines Produktionsverbunds oder auch mehrerer Produktionsverbände, so dass die Produktion ohne das Problem der Erzeugung von Makulatur bzw. der bis zum Einnehmen der Produktionsbereitschaft ungenutzt verstreichenden Zeit aufgenommen werden kann. Zur Einnahme der Nulllage werden entsprechende Steuersignale an die Einzelantriebe bzw. die Achsen des Systems weitergeleitet. Die Einstellzeit zur Einnahme des Positionsgleichlaufs bei der Druckmaschine entfällt durch die Ansteuerung der Einzelantriebe bereits im Anlagenstillstand derart, dass diese ihre Nullwerte einnehmen.

Selbstverständlich kann die Einnahme der Nulllagewerte in eine Regelung eingebettet werden, so dass die korrekte Einstellung der Einzelantriebe über an die Steuerungseinrichtung bzw. die Steuerungseinrichtungen zurückgemeldete Signalwerte bzw. Istwerte nochmals überprüft und gegebenenfalls korrigiert werden kann. Die direkte Vorgabe von Nulllagewerten für die einzelnen Antriebe hat in jedem Fall den Vorteil, dass zum Beispiel lediglich auf Tabellen der Produktionskonfigurationen zurückgegriffen werden muss, ohne dass aufwendig ein Versatz bzw. eine Differenz zu einer allgemeinen Referenzposition berechnet werden müsste.

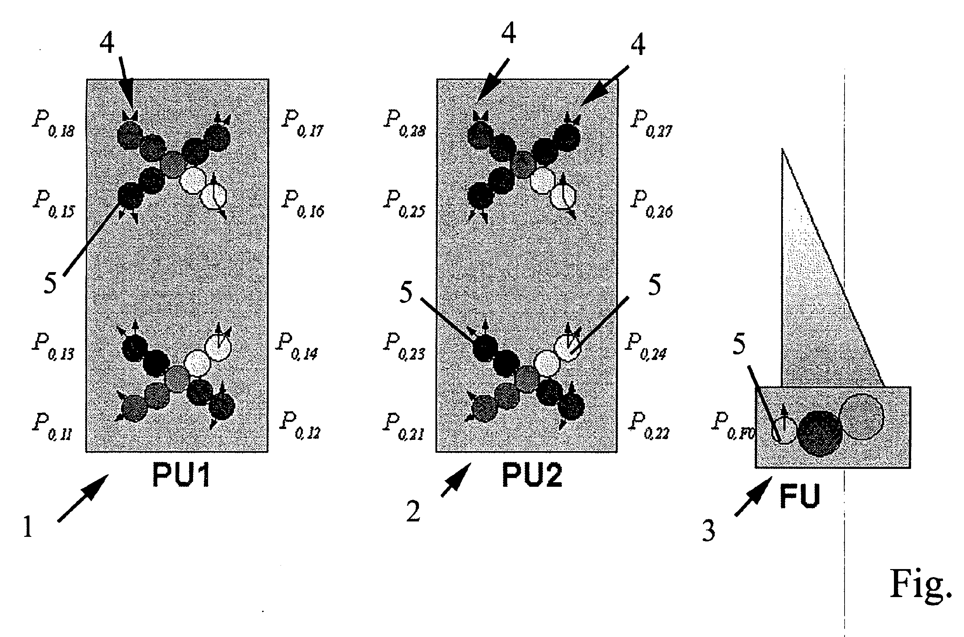

Weitere Vorteile, Merkmale und Einzelheiten des Verfahrens ergeben sich anhand der folgenden Zeichnung bzw. aus dem Ausführungsbeispiel. Dabei zeigt die Figur die Zuordnung produktionsabhängiger Nullreferenzen zu den einzelnen Achsen bzw. Antrieben eines Antriebs- oder Positionsverbunds. Das hier gezeigte Ausführungsbeispiel bezieht sich auf Druckmaschinen, wobei mit den Bezugszeichen 1 ein erstes Maschinenaggregat, mit den Bezugszeichen 2 ein zweites Maschinenaggregat bezeichnet ist (PU1 bzw. PU2 für "Printing Unit" 1 bzw. 2). Die Maschinenaggregate 1 und 2 sind also verschiedene Druckeinheiten. Ein weiteres Maschinenaggregat 3 ist das Maschinenaggregat FU, das im hier gezeigten Fall eine Falzeinheit ist (FU für "Folder Unit").

Bei den Maschinenaggregaten 1, 2 und 3 sind für die einzelnen Achsen bzw. Antriebe jeweils in Abhängigkeit von der durchzuführenden Produktion Nullreferenzen angegeben, die hier als P_{0,xy} bezeichnet sind, wobei die Null für die Nulllage steht, die dieser spezifische Lagewert darstellt, während x und y die jeweiligen Achslagen bezeichnen. Die verschiedenen Pfeile 4, die bei den Komponenten 5 der Maschinenaggregate 1, 2 sowie 3 eingetragen sind, bezeichnen die jeweiligen Winkel- bzw. Positionslagen bzw. die Möglichkeiten zur Verstellung dieser Lagen in Abhängigkeit von der jeweils aufzunehmenden Produktion.

Dabei ist im hier gezeigten Beispiel einer Druckmaschine für die Falzeinheit, also das Maschinenaggregat 3, eine produktionsunabhängige Nulllage P_{0,F0} vorgesehen. Dies ermöglicht einen Wechsel der Produktion bei bereits eingezogener zu bedruckender Bahn ohne Verstellung des Falzantriebs. Ebenso könnte diese Nulllage aber auch produktionsabhängig vorgegeben werden.

Durch das erfindungsgemäße Synchronisierungsverfahren kann die Synchronisierung des Antriebsverbunds bereits im Maschinenstillstand erfolgen. Der Zeitaufwand verringert sich und das Problem der Erzeugung von Makulatur entfällt weitgehend. Die dezentrale Synchronlagekontrolle mit Vorgaben produktionsspezifischer Lagewerte für die einzelnen Antriebe der Aggregate und des Antriebsverbands insgesamt ermöglicht in der Steuerung die Implementierung neuer Funktionen, die zur Annahme dieses Nulllagewerts vor dem Anfahren der Produktion bzw. zur gezielten Stillsetzung oder besonders schnellen gezielten Stillsetzung führen. Die Antriebe können so besonders leicht ausgeschaltet und verdreht oder verstellt werden. Der Produktionsverbund ist somit praktisch sofort positionssynchron eingestellt und somit in Produktionsbereitschaft.

### Bezugszeichenliste

- 1: Erstes Maschinenaggregat PU1
- 2: Zweites Maschinenaggregat PU2
- 3: Drittes Maschinenaggregat FU
- 4: Pfeil
- 5: Komponente
- P_{0,xy}: Nullreferenz

## Patentansprüche

1. Verfahren zur Positionssynchronisierung eines aus mehreren Einzelantrieben bestehenden Antriebsverbunds, insbesondere eines Antriebsverbunds einer Druckmaschine, wobei für jeden Einzelantrieb als Nullreferenz (P_{0,xy}) für die Position ein eigener, Insbesondere produktionsspezifischer, Referenzlagewert definiert wird, und eine Funktion zur Einnahme des oder der jeweiligen Referenzlagewerte abgelegt wird, **dadurch gekennzeichnet, dass** in wenigstens einer Steuerungseinrichtung des Antriebsverbunds für wenigstens einen Einzelantrieb des Antriebsverbunds, eine Funktion zum Stillsetzen und/oder schnellen Stillsetzen des Betriebs und/oder der Produktion mit Einnahme des oder der jeweiligen Referenzlagewerte im Stillstand, und/oder zur Einnahme des oder der jeweiligen Referenzlagewerte im Stillstand abgelegt wird, so dass der positionssynchrone Antriebsverbund bereits vor dessen Anfahren hergestellt ist.

2. Verfahren nach Anspruch 1, **dadurch gekennzeichnet, dass** die Funktion zur Einnahme des oder der jeweiligen Referenzlagewerte bei wenigstens einer Zuordnung eines jeweiligen Einzelantriebs zu einem Produktionsverbund ausgeführt wird.

3. Verfahren nach einem der vorangehenden Ansprüche, **dadurch gekennzeichnet dass** der produktionsspezifische Referenzlagewert als Bestandteil einer Produktionskonfiguration definiert wird und/oder den Einzelantrieben bekannt gemacht wird, insbesondere seitens wenigstens einer Steuerungseinrichtung.

4. Verfahren nach einem der vorangehenden Ansprüche, **dadurch gekennzeichnet, dass** mittels der Definition eines eigenen Referenzlagewerts für jeden Einzelantrieb ein Ausschalten und/oder Verdrehen und/oder Verstellen von Einzelantrieben beim Anfahren und/oder erneuten Anfahren der Produktion unterstützt wird.

## Claims

1. A method for position synchronization of a drive network consisting of several individual drives, in particular of a drive network of a press, in which as a zero reference (P_{0,xy}) for the position for each individual drive a, in particular product-specific, individual reference position value is defined, and a function for recording of one or each respective reference values is stored, **characterized in that** in at least one control device of the drive network for at least one individual drive of the drive network, a function for shutting down and/or fast shutting down of the operation and/or the production with recording of one or each respective reference values at a standstill, and/or for recording of one or each respective values at a standstill will be stored, so that the position synchronous drive network is established even before its start.

2. The method according to claim 1, **characterized in that** the function for recording of one or each respective values will be executed to at least one assignment of a respective individual drive to a production network.

3. The method according to any one of the previous claims, **characterized in that** the product-specific reference position value is defined as part of a production configuration and/or will be announced to the individual drives, in particular on the part of at least one control device.

4. The method according to any one of the previous claims, **characterized in that** by means of the definition of a separate reference position value for each individual drive a turning off and/or twisting and/or shifting of single drives during start-up and/or renewed start-up of production is supported.

## Revendications

1. Procédé de synchronisation de position d'un ensemble d'entraînement constitué d'une pluralité d'entraînements individuels, en particulier d'un ensemble d'entraînement d'une machine d'impression, dans lequel, pour chaque entraînement individuel, est définie comme zéro de référence (P_{0,xy}) pour la position une valeur de position de référence propre, en particulier spécifique de la production, et est mémorisée une fonction de prise en compte de la ou des valeurs de position de référence respectives, **caractérisé en ce que**, dans au moins un dispositif de commande de l'ensemble d'entraînement pour au moins un entraînement individuel de l'ensemble d'entraînement, est mémorisée une fonction d'arrêt et/ou d'arrêt rapide du fonctionnement et/ou de la production avec prise en compte de la ou des valeurs de position de référence respectives à l'arrêt, et/ou de prise en compte de la ou des valeurs de position de référence respectives à l'arrêt, de sorte que l'ensemble d'entraînement est déjà synchronisé en position avant son démarrage.

2. Procédé selon la revendication 1, **caractérisé en ce que** la fonction de prise en compte de la ou des valeurs de position de référence respectives est exécutée lorsque s'opère au moins une association d'un entraînement individuel respectif avec un ensemble de production.

3. Procédé selon l'une des revendications précédentes, **caractérisé en ce que** la valeur de position de référence spécifique de la production est définie comme composante d'une configuration de production et/ou est communiquée aux entraînements individuels, notamment par au moins un dispositif de commande.

4. Procédé selon l'une des revendications précédentes, **caractérisé en ce que** la définition d'une valeur de position de référence propre à chaque entraînement individuel soutient une mise hors circuit et/ou un déplacement et/ou un réglage d'entraînements individuels au démarrage et/ou au redémarrage de la production.
